(19) Europäisches Patentamt
European Patent Office
Office européen des brevets

(11) **EP 2 361 368 B1**

(12) **FASCICULE DE BREVET EUROPEEN**

(45) Date de publication et mention
de la délivrance du brevet:
**20.03.2019 Bulletin 2019/12**

(21) Numéro de dépôt: **09799673.0**

(22) Date de dépôt: **18.12.2009**

(51) Int Cl.:
**G01C 19/38** *(2006.01)* **G01C 21/16** *(2006.01)*
**G01C 25/00** *(2006.01)*

(86) Numéro de dépôt international:
**PCT/FR2009/001455**

(87) Numéro de publication internationale:
**WO 2010/072917 (01.07.2010 Gazette 2010/26)**

(54) **PROCEDE DE DETERMINATION D'UN CAP EN DIRECTION DU NORD GEOGRAPHIQUE AU MOYEN D'UNE CENTRALE INERTIELLE**

VERFAHREN ZUM BESTIMMEN EINES KURSES IN DER RICHTUNG DES GEOGRAFISCHEN NORDPOLS UNTER VERWENDUNG EINER TRÄGHEITSMESSEINHEIT

METHOD FOR DETERMINING A HEADING IN THE DIRECTION OF TRUE NORTH USING AN INERTIAL MEASUREMENT UNIT

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **22.12.2008 FR 0807335**

(43) Date de publication de la demande:
**31.08.2011 Bulletin 2011/35**

(73) Titulaire: **Safran Electronics & Defense**
**92100 Boulogne-Billancourt (FR)**

(72) Inventeur: **BECHERET, Yves**
**92100 Boulogne-Billancourt (FR)**

(74) Mandataire: **Lavialle, Bruno François Stéphane**
**Cabinet Boettcher**
**16, rue Médéric**
**75017 Paris (FR)**

(56) Documents cités:
**EP-A- 0 717 264        GB-A- 2 049 931**
**US-A1- 2005 022 402**

• **GUOFU SUN ET AL: "Accelerometer based north finding system" 20000313; 20000313 - 20000316, 13 mars 2000 (2000-03-13), pages 399-403, XP010376964**

**Description**

La présente invention concerne un procédé de recherche d'un cap en direction du Nord géographique.

La recherche du Nord géographique est une phase préalable à toute opération de visée, de désignation, de guidage ou de navigation afin de déterminer un cap de référence à partir duquel seront déterminées les données de visée ou de navigation. Lorsque le guidage ou la navigation sont réalisés au moyen d'un système comportant une centrale inertielle ou module senseur inertiel, le système devient opérationnel après qu'il a été « aligné » sur ce cap.

Il est connu de déterminer un cap en direction du nord en utilisant un chercheur de Nord qui comporte un gyroscope fermement arrimé au sol en position horizontale. Le chercheur de Nord détermine précisément la direction du Nord en l'absence de mouvement du gyroscope par rapport à la surface terrestre. La précision de la détermination ne dépend principalement que de la dérive du gyroscope, voire de la stabilité de la dérive lorsque sont effectuées deux mesures à des caps opposés. En revanche, le plus petit mouvement du gyroscope, même imperceptible par un être humain, dégrade rapidement cette précision et fausse la recherche du Nord. L'installation du chercheur de Nord doit donc être particulièrement soignée afin d'éviter de tels mouvements.

Avec les équipements pourvus d'un module senseur inertiel complet nécessaire à la navigation inertielle, il est connu de déterminer un cap en direction du Nord en exploitant les données du module senseur inertiel selon un mode gyrocompas alors que l'équipement est immobilisé en position par rapport à la surface terrestre. On rappelle qu'un module senseur inertiel comprend trois axes de mesure accélérométriques et trois axes de mesure gyrométriques. L'alignement de l'équipement consiste soit à amener puis maintenir physiquement le module senseur inertiel dans une position prédéterminée par rapport à un repère géographique local ou inertiel, soit à estimer puis entretenir par calcul les écarts angulaires entre le repère géographique local ou inertiel et le module senseur inertiel.

Dans ce dernier cas, l'exploitation combinée des données issues des accéléromètres et des gyromètres, associée à une quasi-absence de déplacement par rapport à la Terre, permet de réaliser un alignement et donc d'identifier et entretenir le cap du coeur du module senseur. Toutefois, la précision du cap ainsi déterminé dépend donc de celle des accéléromètres dont le prix croît rapidement en fonction de la précision demandée. A précision égale, un chercheur de Nord est bien moins onéreux qu'un gyrocompas.

On notera que, par extension, on nomme gyrocompas à la fois le mode de calcul et le dispositif technique spécialement agencé pour la mise en oeuvre de ce calcul. Il en est de même pour le chercheur de Nord.

Le document US-A-2005/022402 décrit un dispositif de navigation incorporant une centrale inertielle qui comporte trois axes de mesure gyrométrique et trois axes de mesure accélérométrique et qui est utilisée en mode gyrocompas. Le document GB-A-2 049 931 décrit un dispositif inertiel qui comporte deux gyros et un accéléromètre monté sur un support pivotant autour d'un axe d'azimuth et qui fonctionne de manière similaire au dispositif du document précédent. Le document EP-A-717 264 décrit un procédé d'estimation des biais gyrométriques de gyromètres embarqués sur un aéronef. Ce procédé consiste à comparer une rotation terrestre mesurée à une rotation terrestre calculée et utilise à cette fin les données provenant de la centrale inertielle de l'aéronef.

Un but de l'invention est de fournir un moyen permettant d'optimiser la recherche de Nord au moyen d'un module senseur inertiel.

A cet effet, on prévoit, selon l'invention, un procédé de détermination d'un cap en direction du Nord géographique au moyen d'un module senseur inertiel comportant trois axes de mesure gyrométriques et trois axes de mesure accélérométriques, selon la revendication 1. Ce procédé comprend entre autres, les étapes de :

- exploiter des données du module senseur inertiel selon un mode chercheur de Nord pour obtenir une première valeur de cap,
- exploiter des données du module senseur inertiel selon un mode gyrocompas pour obtenir une deuxième valeur de cap,
- déterminer le cap en direction du nord en utilisant la première valeur de cap et la deuxième valeur de cap, en tenant compte de l'écart calculé préalablement entre les première et deuxième valeur de cap.

Ainsi, la première valeur de cap est calculée en utilisant le module senseur inertiel comme chercheur de Nord, c'est-à-dire en calculant le cap à partir de données gyrométriques, les données accélérométriques n'étant pas utilisées dans le calcul du cap lui-même mais simplement pour déterminer le plan horizontal moyen vis-à-vis du module senseur. La deuxième valeur de cap est calculée en utilisant le mode gyrocompas, c'est-à-dire en utilisant le flux de données accélérométriques en plus des données gyrométriques pour estimer le cap et l'assiette de la centrale inertielle. Ceci permet d'obtenir une valeur de cap relativement précise en limitant le risque d'une erreur importante liée à un mouvement angulaire de la centrale inertielle.

Avantageusement, le calcul du cap comprend l'étape de

- retenir comme cap en direction du Nord la première valeur de cap et/ou la deuxième valeur de cap en tenant compte de l'écart calculé préalablement.

Ces deux valeurs de cap sont affectées d'erreurs dont une composante commune résultant de la dérive moyenne des gyromètres pendant la mesure et une composante non commune résultant des évolutions d'un biais (ou décalage) des accéléromètres. L'effet d'une dérive de biais accélérométrique est négligeable en ce qui concerne la première valeur de cap mais peut générer une erreur de cap supérieure à l'effet des erreurs gyrométriques en ce qui concerne la deuxième valeur de cap. L'écart entre les deux valeurs de cap n'est en revanche pas affecté par la dérive des gyromètres qui s'élimine lors du calcul de l'écart. L'écart peut alors servir de donnée discriminante pour retenir de manière simple et fiable l'une ou l'autre valeur de cap comme cap en direction du Nord. Si l'écart est très faible voire nul, la première valeur de cap, qui est la plus précise dans l'absolu, est retenue. Dans le cas contraire, la deuxième valeur de cap est retenue. Le procédé de l'invention facilite ainsi la sélection du mode opératoire le plus performant en fonction des conditions de mesure.

Plus précisément, le procédé comprend l'étape d'estimer une cohérence de l'écart calculé avec une hypothèse d'absence de mouvement de la centrale inertielle par rapport au sol et :

- si l'écart est cohérent prendre la première valeur de cap comme cap en direction du Nord,
- si l'écart est incohérent prendre la deuxième valeur de cap comme cap en direction du Nord.

Eventuellement, si l'écart ne permet pas de conclure sur la cohérence de l'écart avec l'hypothèse d'une absence de rotation du module senseur par rapport à la terre, il est possible d'utiliser une combinaison des deux valeurs de cap pour obtenir le cap retenu.

De préférence, l'estimation de cohérence comprend l'étape de comparer l'écart pondéré d'un cosinus de latitude à au moins un seuil et, avantageusement, le seuil est égal à la racine carrée de la somme du carré d'un écart-type d'une composante de dérive moyenne Est des gyromètres pendant le temps de mesure et du carré d'un écart-type d'une variation moyenne de biais des accéléromètres en direction du Sud pendant le temps de mesure.

Ce mode de calcul est particulièrement efficace pour sélectionner la valeur de cap.

En variante, le calcul du cap comprend les étapes de :

- pondérer la première valeur de cap et la deuxième valeur de cap,
- additionner la première valeur de cap et la deuxième valeur de cap ainsi pondérées pour obtenir le cap en direction du Nord, la pondération étant déterminée pour minimiser un écart-type d'une erreur sur le cap en direction du Nord.

Ceci permet de limiter l'erreur de cap en cas de mouvement tout en conservant une précision statistique correcte en l'absence de mouvement angulaire du module senseur par rapport au sol sans recourir à des accéléromètres couteux.

Avantageusement, le procédé comprend l'étape de détecter un mouvement du module senseur inertiel par un détecteur extérieur au module senseur inertiel et de retenir comme cap en direction du Nord la deuxième valeur de cap.

Ainsi, si une information extérieure montre que le module senseur inertiel a été déplacé, la deuxième valeur de cap est automatiquement retenue.

D'autres caractéristiques et avantages de l'invention ressortiront à la lecture de la description qui suit d'un mode de mise en oeuvre particulier non limitatif de l'invention.

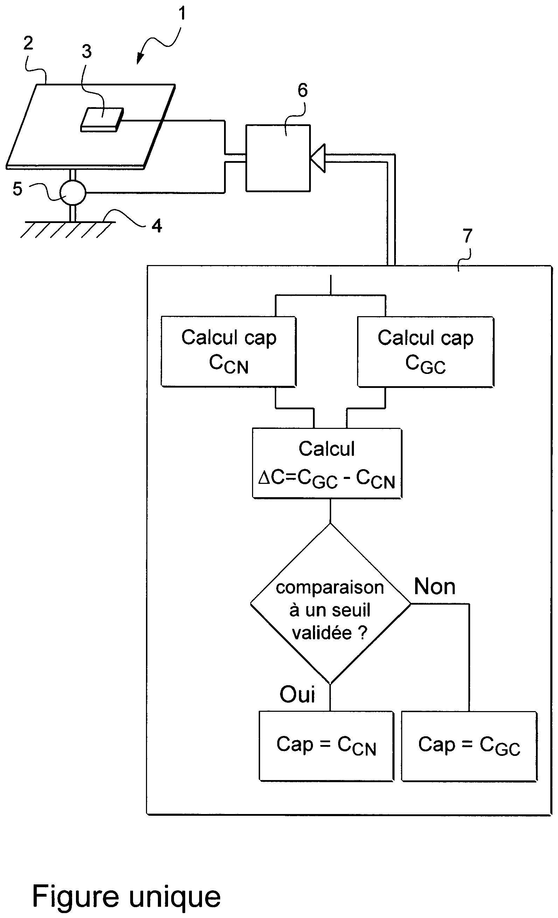

Il sera fait référence à la figure unique annexée représentant par un bloc-diagramme une mise en oeuvre du procédé de l'invention.

Le procédé de l'invention concerne la recherche du Nord géographique au moyen d'un module senseur inertiel ou centrale inertielle 1 comportant une plateforme 2 pourvue d'accéléromètres 3 (dont un seul est représenté sur la figure) et reliée par des gyromètres 5 (dont un seul est représenté sur la figure) à un support fixe 4 comme un boîtier. Il est entendu que la description et la représentation de la centrale inertielle sont simplifiées à l'extrême, l'invention ne portant pas sur la structure de la centrale inertielle qui est connue par ailleurs. La centrale inertielle 1 est solidaire d'un équipement, tel qu'un véhicule, ayant un châssis auquel le boîtier de la centrale inertielle 1 est rigidement fixé.

La centrale inertielle 1 est associée à un calculateur 6 qui exécute un programme 7 de commande de la centrale inertielle 1 agencé pour calculer un cap en direction du Nord géographique :

- comme un chercheur de Nord en utilisant les signaux de données issus d'au moins un des gyromètres 5,
- comme un gyrocompas en utilisant également les signaux de données issus des accéléromètres 3.

Le procédé conforme à l'invention comprend ainsi les étapes de :

- exploiter des données fournies par la centrale inertielle 1 selon un mode chercheur de Nord pour obtenir une première valeur de cap $C_{CN}$,

- exploiter les données issues de la centrale inertielle 1 selon un mode gyrocompas pour obtenir une deuxième valeur de cap $C_{GC}$.

Les deux valeurs de cap $C_{CN}$ et $C_{GC}$ sont affectées d'une erreur comportant une composante gyrométrique et une composante accélérométrique.

La composante gyrométrique d'erreur de cap, identique pour le calcul de la première valeur de cap et le calcul de la deuxième valeur de cap, résulte des dérives moyennes des gyromètres projetées sur la direction Est-Ouest. La composante gyrométrique d'erreur de cap est égale à $Dm_E$ / ($\Omega_T$ * cos ($L_{AL}$)) où $Dm_E$ est la dérive moyenne sur la direction Est due aux dérives moyennes des gyromètres (moyenne sur la durée utile de recherche de nord), $\Omega_T$ est le module de la vitesse de rotation de la Terre par rapport à un repère inertiel (soit environ 4375 $\mu$rad/mn ou 15,04 °/h) et $L_{AL}$ est la latitude d'alignement de la centrale inertielle 1 lors de la recherche de Nord.

La composante accélérométrique d'erreur de cap est négligeable devant la composante gyrométrique pour la première valeur de cap $C_{CN}$. L'erreur sur la première valeur de cap $C_{CN}$ comporte en outre une composante qui résulte de la rotation moyenne $Rm_E$ du coeur de la centrale inertielle 1 autour de la direction Est (cette rotation est due aux mouvements du boîtier et éventuellement aux micros rotations et déformées entre le boîtier et le coeur) et qui vaut $Rm_E$ / ($\Omega_T$ * cos ($L_{AL}$)).

La composante accélérométrique d'erreur de cap pour la deuxième valeur de cap $C_{GC}$ résulte des rampes de biais des accéléromètres et vaut ($PBm_s$/g) / ($\Omega_T$ * cos ($L_{AL}$)) où g est la pesanteur locale et $PBm_s$ est la variation moyenne de biais des accéléromètres en direction du Sud.

Le procédé comprend l'étape de calculer un écart ou différence $\Delta C$ entre la première valeur de cap et la deuxième valeur de cap utilisant toutes deux des données inertielles mesurées pendant la même période. L'écart des deux caps calculés $\Delta C = C_{GC} - C_{CN}$ et est affecté d'une erreur valant [($PBm_s$/g)- $Rm_E$] / ($\Omega_T$ * cos($L_{AL}$)) de sorte que cet écart est indépendant des dérives des gyromètres.

Le procédé prévoit de retenir comme cap la première valeur de cap ou la deuxième valeur de cap en tenant compte de l'écart entre ces deux valeurs.

Dans le mode de réalisation préféré, le procédé comprend l'étape d'estimer une cohérence de l'écart calculé avec une hypothèse d'absence de rotation de la centrale inertielle par rapport au sol et :

- si l'écart est cohérent prendre la première valeur de cap $C_{CN}$ comme cap en direction du Nord,
- si l'écart est incohérent prendre la deuxième valeur de cap $C_{GC}$ comme cap en direction du Nord.

L'estimation de cohérence comprend l'étape de comparer l'écart, pondéré d'un cosinus de latitude et du module de vitesse de la rotation de la Terre, à un seuil S.

Plus précisément, on vérifie si :

$$-S < \Delta C * (\Omega_T * \cos(L_{AL})) < S \qquad (1)$$

où $S = ((\text{écart-type de } (PBm_s/g))^2 + (\text{écart-type de } Dm_E)^2)^{1/2}$.

Si la relation (1) est vérifiée, alors la première valeur $C_{CN}$ est retenue comme cap en direction du Nord. Si la relation (1) n'est pas vérifiée, alors la deuxième valeur $C_{GC}$ est retenue comme cap en direction du Nord.

Le procédé de l'invention comprend l'étape de détecter un mouvement de la centrale inertielle par un détecteur extérieur à la centrale inertielle et de retenir comme cap en direction du Nord la deuxième valeur de cap $C_{GC}$.

En variante, le calcul du cap comprend les étapes de :

- pondérer la première valeur de cap $C_{CN}$ et la deuxième valeur de cap $C_{GC}$,
- additionner la première valeur de cap et la deuxième valeur de cap ainsi pondérées pour obtenir le cap en direction du Nord, la formule de calcul pondération en fonction de l'écart calculée $\Delta C$ ou $\Delta C * (\Omega_T * \cos(L_{AL}))$ étant déterminée pour minimiser un écart-type sur une erreur sur le cap obtenu.

Le cap en direction du Nord (ou, dans cette variante, cap pondéré) est alors égal à :
$\lambda_C * C_{GC} + (1-\lambda_C) * C_{CN}$ où le coefficient de pondération $\lambda_C$ est tel que $0 \leq \lambda_C \leq 1$ et $\lambda_C$ est une fonction de l'écart calculé $\Delta C * (\Omega_T * \cos(L_{AL}))$.

Le cap ainsi calculé est sensible aux dérives des gyromètres de manière identique aux deux autres valeurs de cap calculé décrites ci-dessus.

L'erreur $ErrCp(\lambda_C)$ affectant le cap pondéré est telle que :

$$ErrCp(\lambda_C)*(\Omega_T * \cos(L_{AL})) = Dm_E + \lambda_C * PBm_S/g + (1-\lambda_C)*Rm_E$$

où $Rm_E = PBm_S/g - \Delta C*(\Omega_T * \cos(L_{AL}))$.

Plusieurs critères peuvent permettre de définir la manière dont le coefficient de pondération $\lambda_c$ peut varier en fonction de la donnée $\Delta C*(\Omega_T * \cos(L_{AL}))$ ou en fonction de $\Delta C$. Par exemple, on choisit la loi de variation du coefficient de pondération $\lambda_c$ en fonction de $X = \Delta C * (\Omega_T * \cos(L_{AL}))$ qui minimise, pour une latitude donnée et pour l'écart type des vitesses de rotation moyenne possibles « $Rm_E$ » ne déclenchant pas une détection de mouvement, l'écart type (considéré en terme statique et non temporel) de l'erreur sur le cap pondéré $ErrCp(\lambda_C) * (\Omega_T * \cos(L_{AL}))$.

Bien entendu, l'invention n'est pas limitée au mode de mise en oeuvre décrit mais englobe toute variante entrant dans le champ de l'invention telle que définie par les revendications.

La structure de la centrale inertielle peut être différente de celle décrite ici.

Le nombre de mesures réalisées pour le calcul des valeurs de cap peut être supérieur à un.

Ainsi, il est possible de monter la centrale inertielle sur un élément réglable en position angulaire autour d'un axe sensiblement normal au sol et d'effectuer un calcul de cap pour trois positions angulaires différentes, ce qui permet en effectuant une moyenne des trois valeurs calculées d'éliminer l'effet de la dérive des gyromètres sur l'erreur de cap (la dérive étant de forme sinusoïdale).

## Revendications

1. Procédé de détermination d'un cap en direction du Nord géographique au moyen d'un module senseur inertiel comportant trois axes de mesure gyrométriques et trois axes de mesure accélérométriques, comprenant les étapes de :

   - exploiter des données du module senseur inertiel selon un mode chercheur de Nord en utilisant des données issues des axes de mesure gyrométriques pour obtenir une première valeur de cap,
   - exploiter des données du module senseur inertiel selon un mode gyrocompas en utilisant les données issues des axes de mesure gyrométriques et des axes de mesure accélérométriques pour obtenir une deuxième valeur de cap,
   - calculer un écart entre la première valeur de cap et la deuxième valeur de cap,
   - déterminer le cap en direction du nord en utilisant la première valeur de cap et la deuxième valeur de cap en tenant compte dudit écart calculé.

2. Procédé selon la revendication 1, dans lequel le calcul du cap comprend l'étape de :
   -- retenir comme cap en direction du Nord la première valeur de cap et/ou la deuxième valeur de cap en tenant compte de l'écart calculé.

3. Procédé selon la revendication 2, comprenant l'étape d'estimer une cohérence de l'écart calculé avec une hypothèse d'absence de mouvement de la centrale inertielle par rapport au sol et :

   - si l'écart est cohérent prendre la première valeur de cap comme cap,
   - si l'écart est incohérent prendre la deuxième valeur de cap comme cap en direction du Nord.

4. Procédé selon la revendication 3, dans lequel l'estimation de cohérence comprend l'étape de comparer, à au moins un seuil, l'écart pondéré d'un cosinus de latitude d'alignement du module senseur inertiel lors de la recherche de Nord et du module de vitesse de la rotation de la Terre par rapport à un repère inertiel.

5. Procédé selon la revendication 4, dans lequel le seuil est égal à la racine carrée de la somme du carré d'un écart-type d'une composante de dérive moyenne Est des gyromètres pendant le temps de mesure et du carré d'un écart-type d'une variation moyenne de biais des accéléromètres en direction du Sud pendant le temps de mesure.

6. Procédé selon la revendication 1, dans lequel le calcul du cap comprend les étapes de :

   - pondérer la première valeur de cap et la deuxième valeur de cap,
   - additionner la première valeur de cap et la deuxième valeur de cap ainsi pondérées pour obtenir le cap en direction du Nord, la pondération étant déterminée pour minimiser un écart-type d'une erreur sur le cap en direction du Nord.

**7.** Procédé selon la revendication 1, comprenant l'étape de détecter un mouvement du module senseur par un détecteur extérieur au module senseur inertiel et de retenir comme cap en direction du Nord la deuxième valeur de cap.

**Patentansprüche**

**1.** Verfahren zum Bestimmen eines Kurses in Richtung des geographischen Nordens mittels eines Trägheitssensormoduls, das drei gyrometrische Messachsen und drei akzelerometrische Messachsen umfasst, umfassend die Schritte:

- Auswerten von Daten des Trägheitssensormoduls gemäß einem Nordsucher-Modus, indem Daten verwendet werden, die von den gyrometrischen Messachsen stammen, um einen ersten Kurswert zu erhalten;
- Auswerten von Daten des Trägheitssensormoduls gemäß einem Kreiselkompass-Modus, indem die Daten verwendet werden, die von den gyrometrischen Messachsen und den akzelerometrischen Messachsen stammen, um einen zweiten Kurswert zu erhalten,
- Berechnen einer Differenz zwischen dem ersten Kurswert und dem zweiten Kurswert,
- Bestimmen des Kurses in Richtung Nord, indem der erste Kurswert und der zweite Kurswert verwendet werden und dabei die berechnete Differenz berücksichtigt wird.

**2.** Verfahren nach Anspruch 1, bei dem die Berechnung des Kurses den Schritt umfasst:
- Verwenden als Kurs in Richtung Nord des ersten Kurswertes und/oder des zweiten Kurswertes unter Berücksichtigung der berechneten Differenz.

**3.** Verfahren nach Anspruch 2, umfassend den Schritt des Schätzens einer Kohärenz der berechneten Differenz mit einer Hypothese einer fehlenden Bewegung der inertialen Messeinheit in Bezug auf den Boden und:

- wenn die Differenz kohärent ist, Auswählen des ersten Kurswertes als Kurs,
- wenn die Differenz inkohärent ist, Auswählen des zweiten Kurswertes als Kurs in Richtung Nord.

**4.** Verfahren nach Anspruch 3, bei dem die Kohärenzschätzung den Schritt des Vergleichens der gewichteten Differenz eines Breiten-Kosinus der Ausrichtung des Trägheitssensormoduls während der Nordsuche und des Moduls der Geschwindigkeit der Drehung der Erde in Bezug auf ein Inertialsystem mit mindestens einem Schwellwert umfasst.

**5.** Verfahren nach Anspruch 4, bei dem der Schwellwert gleich der Quadratwurzel der Summe des Quadrats einer Standardabweichung einer Komponente einer mittleren Ostabweichung der Gyrometer während der Messzeit und des Quadrats einer Standardabweichung einer mittleren Verzerrungsvariation der Akzelerometer in Richtung Süd während der Messzeit ist.

**6.** Verfahren nach Anspruch 1, bei dem die Berechnung des Kurses die Schritte umfasst:

- Gewichten des ersten Kurswertes und des zweiten Kurswertes,
- Addieren des so gewichteten ersten Kurswertes und des so gewichteten zweiten Kurswertes, um den Kurs in Richtung Nord zu erhalten, wobei die Gewichtung bestimmt wird, um eine Standardabweichung eines Fehlers bezüglich des Kurses in Richtung Nord zu minimieren.

**7.** Verfahren nach Anspruch 1, umfassend den Schritt des Erfassens einer Bewegung des Sensormoduls durch einen außerhalb des Trägheitssensormoduls befindlichen Detektor und des Verwendens des zweiten Kurswertes als Kurs in Richtung Nord.

**Claims**

**1.** A method of determining a heading in the geographical North direction by means of an inertial sensor module having three rate gyro measurement axes and three accelerometer measurement axes, the method comprising the steps of:

• using data from the inertial sensor module in a North-seeking mode by using data from gyro measurement axes to obtain a first heading value;

• using data from the inertial sensor module in a gyro-compass mode by using data from gyro measurement axes and from accelerometer measurement axes to obtain a second heading value; and

• calculating a difference between the first heading value and the second heading value,

• determining the heading in the North direction by using the first heading value and the second heading value taking into account the difference

2. A method according to claim 1, wherein the heading calculation can include the step of:

• using as the heading in the North direction the first heading value and/or the second heading value, taking account of the calculated difference.

3. A method according to claim 2, including the step of estimating consistency between the calculated difference and the assumption that there is no movement of the inertial unit relative to the ground; and

• if the difference is consistent with that assumption, taking the first heading value as the heading; and

• if the difference is inconsistent with that assumption, taking the second heading value as the heading in the North direction.

4. A method according to claim 3, wherein estimating consistency includes the step of comparing, at least one threshold, the weighted difference of a latitude cosine of the inertial sensor module when searching North and the speed module of the rotation of the earth relative to an inertial reference.

5. A method according to claim 4, wherein the threshold is equal to the square root of the sum of the square of a standard deviation of a mean East drift component of the gyros during the measurement time plus the square of a standard deviation of a mean bias variation of the accelerometers in the South direction during the measurement time.

6. A method according to claim 1, wherein the heading calculation includes the steps of:

• weighting the first heading value and the second heading value; and

• adding together the first and second heading values as weighted in this way to obtain the heading in the North direction, the weighting being determined so as to minimize a standard deviation of error concerning the heading in the North direction.

7. A method according to claim 1, including the step of detecting movement of the sensor module by means of a detector external to the inertial sensor module and, if such movement is detected, using the second heading value as the heading in the North direction.

Figure unique

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005022402 A
- GB 2049931 A
- EP 717264 A